# FASCICULE DE BREVET EUROPEEN

(11) **EP 2 861 036 B1**
(45) Date de publication et mention de la délivrance du brevet: **02.01.2019**
(21) Numéro de dépôt: 14188338.9
(22) Date de dépôt: 09.10.2014
(51) Int. Cl.: H04W 84/18, H04W 48/20, H04W 88/04

(54) **Procédé d'attachement dans un réseau ad-hoc ; support d'enregistrement d'informations, systèmes et noeuds associés**
Anschlussverfahren an einem Ad-hoc-Netzwerk, entsprechender Informationsdatenträger, entsprechende Systeme und Knoten
Method for attachment in an ad hoc network; related information recording medium, systems and nodes

(30) Priorité: 09.10.2013 FR 1302345
(43) Date de publication de la demande: 15.04.2015
(73) Titulaire: Thales, 92200 Neuilly Sur Seine (FR)
(72) Inventeur: Hethuin, Serge, 92622 GENNEVILLIERS CEDEX (FR); Selva, Bruno, 92622 GENNEVILLIERS CEDEX (FR)
(74) Mandataire: Lavoix

(56) Documents cités:
- EP-A1- 1 936 872
- WO-A1-2010/019395
- WO-A1-2012/002854
- WO-A1-2012/045370
- US-A1- 2011 164 527
- Henning Sanneck ET AL: "Self-Configuration ('Plug-and-Play')" In: "LTE Self-Organising Networks (SON)", 9 décembre 2011 (2011-12-09), John Wiley & Sons, Ltd, Chichester, UK, XP055089893, ISBN: 978-1-11-997067-5 pages 81-134, DOI: 10.1002/9781119961789.ch4, * alinéas [4.1.3], [04.2] *
- MITSUBISHI ELECTRIC: "Neighbour Discovery and Neighbour Management with Relays", 3GPP TSG RAN WG3 MEETING #68, MONTREAL, CANADA, 10 -14 MAY 2010, , vol. R3-101620, no. 68 10 mai 2010 (2010-05-10), pages 1-5, XP002647086, Extrait de l'Internet: URL:http://www.3gpp.org/ftp/tsg_ran/WG3_Iu /TSGR3_68/Docs/R3-101620.zip [extrait le 2010-05-14]

## Description

La présente invention concerne un procédé d'attachement dans un réseau mobile ad hoc à base de technologie cellulaire sans-fil, et, plus particulièrement, dans un réseau du type comportant une pluralité de noeuds, chaque noeud comportant un module de point d'accès, au moins un module de terminal relais. Le module de terminal relais d'un noeud est, à chaque instant, soit non attaché, soit attaché à un unique module de point d'accès d'un autre noeud du réseau.

Par « technologie cellulaire sans-fils », on entend une technologie telle que définie par la norme WiFi, la norme WiMAX, la norme LTE ou des normes du même type.

Un tel réseau est par exemple décrit dans le document WO 2010/019395 A1 et le document EP 1 936 872 A1.

Le module de terminal relais (module RT dans ce qui suit pour l'acronyme anglais « Relay Terminal ») d'un premier noeud est apte à initier un processus d'attachement vers le module de point d'accès (module AP dans ce qui suit pour l'acronyme anglais « Access Point») d'un second noeud sélectionné parmi les noeuds situés dans le voisinage radioélectrique du premier noeud (c'est-à-dire dans une cellule de couverture du premier noeud).

A chaque instant, le module RT d'un noeud est soit non attaché, soit attaché à un module AP d'un autre noeud du réseau.

Le module AP d'un noeud est soit non attaché, soit attaché à un module RT, soit attaché à plusieurs modules RT.

Une fois un attachement établi, une communication bidirectionnelle entre les deux noeuds attachés peut avoir lieu. Cet attachement est éphémère et peut être rompu à tout instant, soit « volontairement » par un des noeuds qui « préfère » s'attacher à un autre noeud, soit « involontairement », lorsque les noeuds attachés s'éloignent l'un de l'autre et que la qualité de la communication établie se dégrade ou encore qu'un obstacle vient perturber le bilan de liaison entre les deux noeuds.

Le réseau se forme au gré des attachements entre les noeuds.

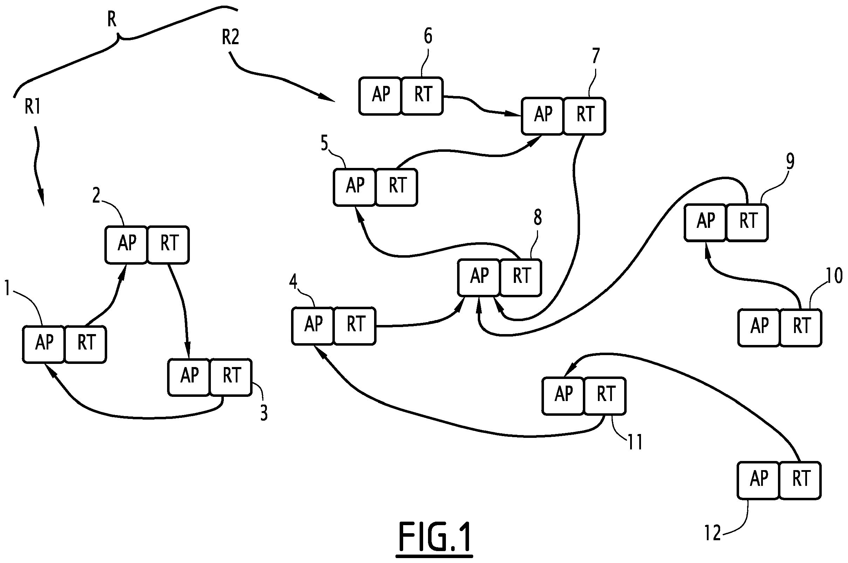

A un instant donné, le réseau présente une topologie définie par un graphe représentant les noeuds et les attachements existant entre ces noeuds. Un tel graphe est par exemple représenté sur la figure 1.

Chaque noeud peut relayer une communication entre un noeud source et un noeud destinataire échangeant des données. Chaque noeud est ainsi propre à router un flux de données.

Selon l'art antérieur, dans le procédé d'attachement, la sélection d'un point d'accès parmi les points d'accès voisins en vue de l'établissement d'un attachement s'effectue, en général, de la manière suivante.

Le module AP de chaque noeud émet périodiquement un signal de balise.

Le module RT d'un noeud découvre périodiquement son environnement radioélectrique à la recherche de signaux de balise et met à jour une liste des noeuds voisins découverts à partir des informations contenues dans des signaux de balise détectés.

Puis, le module RT du noeud sélectionne le noeud voisin vers lequel initier un processus d'attachement soit de manière totalement aléatoire, soit sur la base d'un critère, qui peut être une qualité de la réception du signal de balise, une hiérarchie prédéterminée entre les noeuds du réseau, un historique d'utilisation du réseau (la probabilité d'attachement à un noeud dépendant par exemple du nombre d'attachements à ce noeud dans le passé).

Une fois un noeud voisin sélectionné, le module RT du noeud initie un processus d'attachement vers le module AP du noeud voisin sélectionné. Le processus d'attachement effectué entre le module RT et le module AP dépend de la technologie cellulaire mise en oeuvre. Le module AP sélectionné peut répondre négativement à la demande d'attachement du module RT.

La décision prise localement par un module RT de sélectionner un noeud voisin plutôt qu'un autre en vue d'un attachement ne conduit pas forcément, à l'échelle du réseau, à l'obtention d'une connectivité globale maximale.

Par exemple, le réseau peut être subdivisé en plusieurs sous-réseaux ou composantes, indépendantes entre elles, et ceci bien qu'un noeud d'une composante soit en portée d'un noeud d'une autre composante et qu'en établissant un attachement entre ces deux noeuds, une meilleure connectivité pourrait être obtenue pour le réseau dans sa globalité. Sur la figure 1, les noeuds 1 à 3 appartiennent à une première composante R1 du réseau R, alors que les noeuds 4 à 12 appartiennent à une seconde composante R2 du réseau R. Aucun noeud de la première composante ne peut communiquer avec un noeud de la seconde composante. Cependant, les noeuds 3 et 4 sont en portée. Si un attachement existait entre ces deux noeuds, la connectivité globale du réseau s'en trouverait a priori améliorée, le nombre de paires de noeuds pouvant communiquer entre eux augmentant.

Par exemple encore, les attachements entre les noeuds du réseau peuvent conduire à ce que le chemin suivi par un flux de données depuis un noeud source vers un noeud destinataire, au sein d'une composante, soit plus long que nécessaire. Ainsi, sur la figure 1, dans la seconde composante R2 du réseau R représenté sur la figure 1, le chemin entre le noeud 12 et le noeud 10 est relativement long. Cependant, les noeuds 11 et 8 sont en portée et si un attachement existait entre ces deux noeuds, le chemin entre les noeuds 12 et 10 serait fortement réduit. La réduction de la longueur moyenne des chemins participe à l'amélioration de la connectivité globale du réseau.

L'invention a pour but de palier aux problèmes précités, en proposant notamment un procédé d'attachement permettant d'améliorer la connectivité globale du réseau.

L'invention a pour objet un procédé d'attachement dans un réseau mobile ad hoc à base de technologie cellulaire sans fil, du type comportant une pluralité de noeuds, chaque noeud comportant un module de point d'accès et au moins un module de terminal relais, un module de terminal relais d'un noeud étant apte à découvrir le module de point d'accès de noeuds voisins et à initier un processus d'attachement avec un module de point d'accès d'un noeud voisin sélectionné, un module de terminal relais d'un noeud étant attaché à au plus un module de point d'accès d'un noeud voisin, caractérisé en ce qu'il comporte les étapes consistant :
- au niveau de chaque noeud, à acquérir un positionnement géographique du noeud et à transmettre, via une infrastructure de radiocommunication de service, le positionnement géographique acquis vers un central de traitement ;
- au niveau du central de traitement, à calculer une topologie optimale du réseau en modifiant les attachements possibles entre noeuds considérés comme voisins sur la base de leur position géographique relative, à sélectionner à partir de la topologie optimale, pour chaque noeud, le noeud voisin auquel le noeud considéré doit se connecter, et à transmettre à chaque noeud un identifiant du noeud voisin sélectionné ; et,
- au niveau de chaque noeud, à commander le module de terminal relais du noeud, pour initier un processus d'attachement vers le module de point d'accès du noeud voisin sélectionné indiqué par le central de traitement.

Suivant des modes de réalisation particuliers, le procédé comporte une ou plusieurs des caractéristiques suivantes, prise(s) isolément ou suivant toutes les combinaisons techniquement possibles :
- le procédé comporte, au niveau du central de traitement, après avoir calculé la topologie optimale, l'étape consistant à sélectionner, pour chaque noeud, le noeud voisin auquel il doit se connecter, comporte la détermination, pour chaque noeud, des paramètres de fonctionnement permettant au module de terminal relais dudit noeud d'établir un attachement vers le noeud sélectionné, et à transmettre, à chaque noeud, en plus de l'identifiant du noeud voisin sélectionné, les paramètres de fonctionnement déterminés ; et, au niveau de chaque noeud, régler le module de terminal relais du noeud conformément aux paramètres de fonctionnement indiqués par le central de traitement, avant d'initier le processus d'attachement vers le module de point d'accès du noeud voisin sélectionné.

- le procédé comporte, au niveau du central de traitement, avant de calculer la topologie optimale, une étape consistant à calculer, pour chaque noeud, un ensemble de noeuds voisins avec chacun desquels le noeud considéré est susceptible d'établir un attachement, une étape consistant à détermine, pour chaque noeud voisin dudit ensemble, des paramètres de fonctionnement permettant au module de terminal relais du noeud d'établir un attachement vers le noeud voisins considéré, et une étape consistant à transmettre, à chaque noeud, les paramètres de fonctionnement déterminés pour chaque noeud voisin dudit ensemble ; et, au niveau de chaque noeud, une étape consistant à réaliser un processus de découverte limité à un domaine correspondant aux paramètres de fonctionnement reçus et conduisant à la génération d'une liste contenant les identifiants des noeuds voisins effectivement détectés ; et une étape de transmission de la liste générée vers le central de traitement, au niveau du central de traitement, l'étape de calcul d'une topologie optimale du réseau en modifiant les attachements possibles entre noeuds considérés comme voisins sur la base de leur position géographique relative et effectivement détecté par le noeud considéré tels qu'indiqué dans chaque liste reçue.
- le positionnement géographique comporte une position instantanée du noeud et/ou un cap instantané du noeud.
- un paramètre de fonctionnement du module de terminal relais d'un noeud est un numéro d'un canal d'une bande de fréquences allouée au réseau et/ou une direction de pointage d'un moyen formant antenne du module de terminal relais.
- le central de traitement choisit un canal d'une bande de fréquence allouée sur lequel l'attachement entre le noeud considéré et le noeud voisin sélectionné doit s'effectuer, et transmet le canal choisi au module de terminal relais du noeud et au module de point d'accès du noeud voisin.

L'invention a pour objet un support d'informations, caractérisé en ce qu'il comporte les instructions pour la mise en oeuvre d'un procédé d'attachement tel que défini plus haut, lorsque une partie des instructions sont exécutées par un calculateur d'un noeud du réseau et une autre partie des instructions sont exécutées par un calculateur d'un central de traitement.

L'invention a pour objet un système pour la mise en oeuvre d'un procédé d'attachement tel que défini plus haut, comportant une pluralité de noeuds, chaque noeud comportant un module de point d'accès, au moins un module de terminal relais, un module de terminal relais d'un noeud étant apte à découvrir les modules de point d'accès de noeuds voisins et à initier un processus d'attachement avec un module de point d'accès d'un noeud voisin sélectionné, un module de terminal relais d'un noeud étant attaché à au plus un module de point d'accès d'un noeud voisin, caractérisé en ce qu'il comporte une infrastructure de radiocommunication de service, en ce que chaque noeud comporte un module de communication propre à se connecter à ladite infrastructure, en ce qu'il comporte un central de traitement propre à échanger des messages avec chacun des noeuds du réseau via ladite infrastructure, en ce que chaque noeud comporte un module de commande propre à acquérir un positionnement géographique dudit noeud et à transmettre le positionnement géographique acquis au central de traitement, et en ce que le central de traitement est propre à calculer une topologie optimale du réseau en modifiant les attachements possibles entre noeuds considérés comme voisins sur la base de leur positionnement géographique relatif, à sélectionner à partir de la topologie optimale, pour chaque noeud, le noeud voisin auquel le noeud considéré doit se connecter, et à transmettre à chaque noeud un identifiant du noeud voisin sélectionné, chaque noeud étant propre à commander le module de terminal relais dont il est équipé pour initier un processus d'attachement vers le module de point d'accès du noeud voisin sélectionné indiqué par le central de traitement.

L'invention sera mieux comprise et d'autres caractéristiques, buts et avantages de celle-ci apparaitront plus clairement à l'aide de la description qui va suivre d'un mode de réalisation particulier de l'invention, donnés uniquement à titre illustratif et non limitatif, en référence aux dessins annexés. Sur ces dessins :
- La figure 1 représente schématiquement le graphe d'un réseau mobile ad hoc à base de technologie cellulaire sans-fil ;
- La figure 2 représente un mode de réalisation d'un système pour la mise en oeuvre du procédé selon l'invention ;
- La figure 3 est une représentation schématique de la structure d'un noeud du système de la figure 2 ;
- La figure 4 est une représentation schématique, sous forme de blocs, d'un mode de réalisation du procédé selon l'invention ; et,
- Les figures 5 et 6 sont des graphes représentant respectivement l'évolution au cours du temps du nombre de paires de noeuds pouvant communiquer et de la longueur moyenne des chemins dans un réseau dont les noeuds mettent en oeuvre le procédé de la figure 4.

Le présent procédé d'attachement est notamment avantageusement mis en oeuvre pour former un réseau ad hoc en technologie LTE entre navires (« ship-to-ship » en anglais). La technologie LTE pour les applications maritimes tire avantage de l'utilisation de moyens d'émission/réception à base d'antennes « directives », par exemple du type à faisceau unique, directif et réglable en direction à l'aide d'un positionneur mécanique, ou du type intelligente à faisceau directif commutable quasi instantanément comme les FESA™ (« Fast Electronically Steerable Antenna » en anglais), ou encore du type sectorielle ou multi-sectorielles.

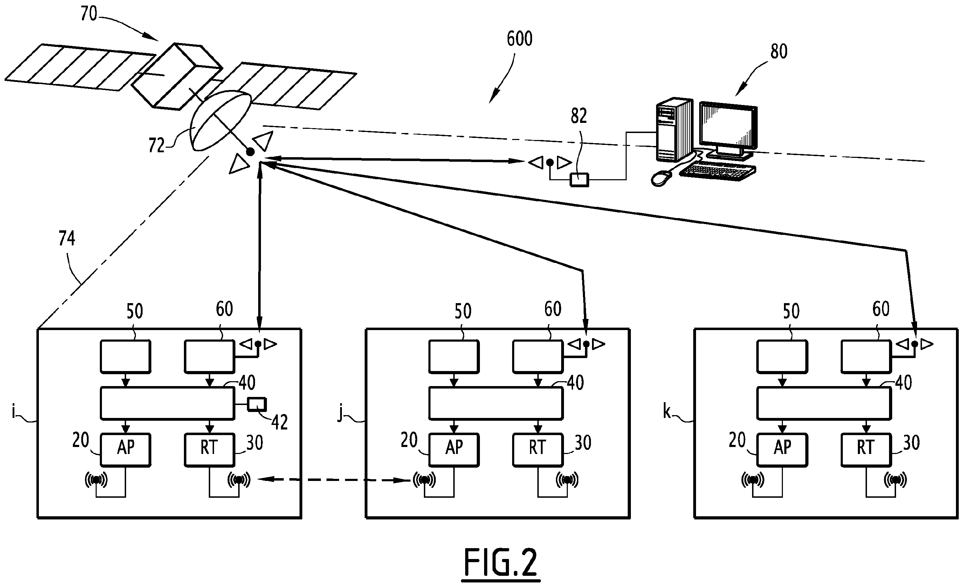

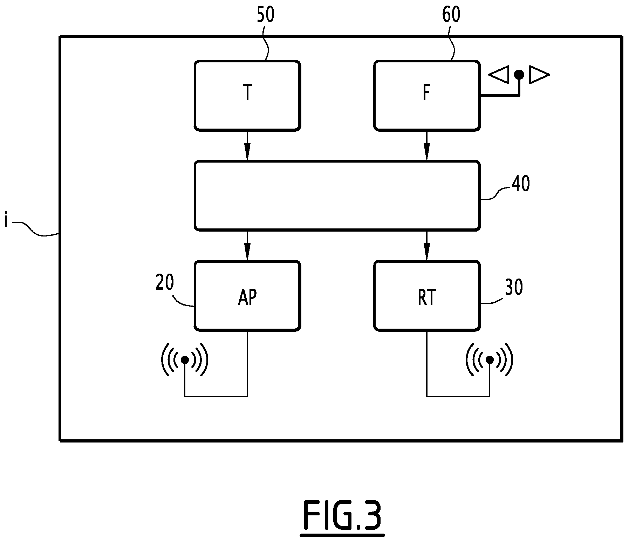

Le présent procédé est ainsi mis en oeuvre dans un système, représenté sur la figure 2, comportant une pluralité de noeuds conformes au noeud i générique, représenté sur la figure 3.

Chaque navire d'une flotte est équipé d'un noeud i, qui est par exemple fixé sur un mât du navire.

Le noeud i comporte un module AP 20, un module RT 30, un module de commande 40, un module de positionnement 50 et un module de communication 60.

Les modules AP 20 et RT 30 sont conformes à ceux de l'état de la technique.

En technologie LTE, le module AP est un eNode B (pour « evolved Node B » en anglais) et le module RT est un équipement utilisateur UE (« User Equipment »).

Le module AP 20 comporte un moyen d'émission/réception radio pour émettre périodiquement un signal de balise. Le signal de balise est émis dans un canal cᵢ d'une bande de fréquences allouée au réseau R. Ce signal de balise comporte l'identifiant i du noeud.

Lorsqu'un module RT 30 d'un noeud j voisin du noeud i a détecté un tel signal de balise et y répond pour initier un processus d'attachement, le module AP 20 du noeud i est propre à exécuter les étapes du processus d'attachement qui lui incombent. Le processus d'attachement est conforme à un protocole défini par la technologie cellulaire utilisée.

Le module RT 30 d'un noeud i comporte un moyen d'émission/réception formant antenne nécessitant de régler dynamiquement une pluralité de paramètres de fonctionnement.

Dans ce qui suit, l'antenne est propre à fonctionner sur un canal sélectionné dynamiquement parmi différents canaux fk de la bande de fréquences allouée au réseau R. Le numéro fi du canal sur lequel doit émettre et/ou recevoir l'antenne du module RT 30 du noeud i est un paramètre de fonctionnement.

De plus, l'antenne est une antenne directive (au sens précisé précédemment), c'est-à-dire apte à pointer selon une direction réglable dans un plan sensiblement horizontal. Cette direction de pointage est définie par rapport à une direction principale correspondant au cap du navire. L'angle ou le numéro du secteur angulaire du lobe principal du diagramme de l'antenne, appelé gisement dans ce qui suit, est un paramètre de fonctionnement.

Lors de la réception d'une requête en découverte, le module RT 30 exécute un processus de découverte. La requête en découverte indique une ou plusieurs paire(s) de paramètres de fonctionnement.

Pour chaque paire de paramètres, le module RT se configure, puis exécute un processus de découverte de son environnement radioélectrique, limité au domaine défini par ces deux paramètres de fonctionnement.

Le module RT 30 est alors propre à découvrir les modules AP des noeuds voisins j émettant dans le canal indiqué et dont la position relative par rapport au noeud i correspond au gisement indiqué.

A l'issue d'un processus de découverte, le module RT 30 est propre à mettre à jour une liste Li des noeuds j voisins du noeud i, dont les signaux de balise ont été détectés. La liste Li comporte l'identifiant j d'un noeud voisin, et les valeurs des paramètres de fonctionnement utilisés pour le découvrir, à savoir le numéro du canal fj et le gisement aj.

Lors de la réception d'une requête en attachement, qui comporte l'identifiant j d'un noeud voisin sélectionné et les paramètres de fonctionnement nécessaires à la réalisation de cet attachement, le module RT 30 du noeud i est propre, après configuration, à initier un processus d'attachement avec ce noeud voisin j. Plus particulièrement, le module RT 30 du noeud i est propre à exécuter les différentes étapes du processus d'attachement avec le module AP du noeud j, conformément au protocole prédéfini de la technologie cellulaire mise en oeuvre.

Le module de positionnement 50 est propre à délivrer une position géographique et un cap du navire équipé du noeud i. Le module de positionnement 50 est par exemple un module de positionnement par satellites, notamment du type GPS (pour « Global Positionning System »). En variante, le module de positionnement est partagé entre plusieurs systèmes du navire et non pas intégré au noeud i.

Le module de communication 60 du noeud i est propre à connecter le noeud i à une infrastructure de radiocommunication de service 70. Le module 60 permet l'échange de messages de service avec un central de traitement 80 via l'infrastructure 70.

Le module de commande 40 du noeud i est propre à appliquer au module AP 20 une requête en génération d'un signal de balise, requête qui comporte l'identifiant i du noeud ainsi que le numéro du canal fᵢ sur lequel émettre ce signal.

Le module de commande 40 est propre à appliquer au module RT 30 une requête en découverte, requête qui comporte les valeurs des paramètres de fonctionnement à utiliser pour ce faire.

Le module de commande 40 est propre à lire la liste Li des noeuds j voisins résultant du processus de découverte réalisé par le module RT 30.

Le module de commande 40 est propre à appliquer au module RT 30 une requête en attachement, requête qui comporte l'identifiant j du noeud voisin sélectionné pour un attachement, ainsi que les valeurs des paramètres de fonctionnement nécessaires à la réalisation de cet attachement.

Le module de commande 40 est propre à acquérir la position géographique et le cap instantanés délivrés par le module 50.

Le module de commande 40 est propre à émettre et à recevoir des messages de service avec le central de traitement 80, via le module de communication 60 et l'infrastructure de communication 70.

Dans le mode de réalisation présenté ici en détail, l'infrastructure de communication 70 comporte une composante satellitaire (satellite 72) dont la couverture géographique s'étend sur l'ensemble de la zone géographique à l'intérieur de laquelle sont amenés à se déplacer les noeuds i du réseau R.

Le central de traitement 80 comporte un moyen d'émission-réception 82 permettant de connecter le central de traitement 80 à l'infrastructure 70. Ainsi, une communication peut être établie, via l'infrastructure 70, entre chaque noeud i du réseau R situé dans la zone de couverture de l'infrastructure 70 et le central de traitement 80, pour l'échange des messages de service.

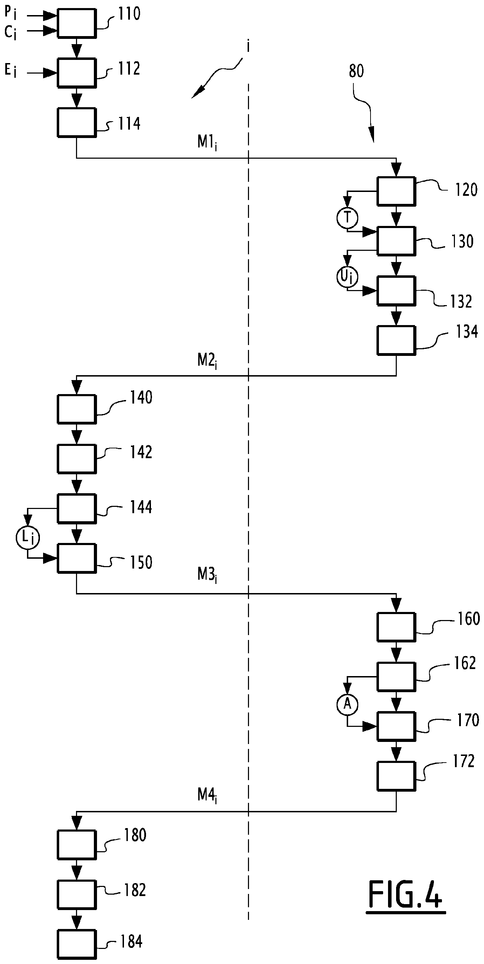

Le procédé 100 est représenté sur la figure 4.

Dans une première étape 110, exécutée au niveau de chaque noeud i, le module de commande 40 acquiert, auprès du module de positionnement 50, la position instantanée Pi et le cap instantané Ci du noeud i.

Dans une étape 112, le module de commande 40 acquiert auprès du module RT 30, l'état instantané Ei de l'attachement courant du noeud i avec un noeud l, lorsqu'un tel attachement existe. L'état Ei est par exemple un doublet comportant l'identifiant du noeud l et la mesure de la qualité de la liaison établie entre le module RT du noeud i et le module AP du noeud l.

Le module de commande 40 acquiert auprès du module AP 20 le numéro du canal fi sur lequel les signaux de balise sont émis.

Puis, le module de commande 40 du noeud i transmet (étape 114) au central de traitement 80, via le module de communication 60 du noeud i et l'infrastructure de radio communication de service 70, un message d'identification M1. Ce message comporte l'identifiant i, la position Pi, le cap Ci et l'état Ei, lorsqu'un tel attachement existe, ainsi que le numéro du canal fi de fonctionnement du module AP 20.

A l'étape 120, le central de traitement 80 collecte les messages d'identification M1 en provenance des différents noeuds du réseau et met à jour une table T des noeuds présents dans le réseau R. Les champs de la table T sont l'identifiant i, la position Pi, le cap Ci, l'état Ei d'un noeud i, ainsi que le numéro du canal de la bande de fréquences allouée que le module AP du noeud i utilise.

Si l'identifiant contenu dans un message d'identification existe déjà dans la table T, les autres informations du message d'identification permettent la mise à jour des champs correspondants de la table T.

Si l'identifiant contenu dans un message d'identification n'existe pas encore dans la table T, une nouvelle ligne est créée dans cette table T. Cela permet de tenir compte d'un nouveau noeud rentrant à l'intérieur de la zone de couverture du satellite 72 de l'infrastructure 70.

Périodiquement, à partir de la table T, le central de traitement 80 effectue (étape 130) un premier calcul consistant à déterminer, pour chaque noeud i, un ensemble Ui de noeuds voisins j avec chacun desquels le module RT 30 du noeud i est susceptible d'établir un attachement.

Ce premier calcul s'effectue en déterminant la position géographique relative entre le noeud i et chaque autre noeud j de la table T et en ne retenant que les identifiants j des noeuds se situant à une distance du noeud i inférieure à une distance seuil d0 (correspondant à la portée des modules AP et RT des noeuds).

Pour chaque noeud j de l'ensemble Ui, le central de traitement 80 détermine (étape 132) l'angle de gisement aj sous-lequel le noeud j est « vu » par le noeud i et extrait le numéro du canal fj dans lequel le module AP du noeud j émet des signaux de balise.

A l'étape 134, le central de traitement 80 élabore et transmet un message de découverte M2 à destination de chaque noeud i comportant, pour chaque noeud j de l'ensemble Ui, l'angle de gisement aj et le numéro du canal fj.

A l'étape 140, le module de commande 40 du noeud i reçoit un message de découverte M2.

En conséquence, le module de commande 40 applique (étape 142) une requête en découverte au module RT 30 en y intégrant les différents canaux fj et les différents gisements aj indiqués dans le message de découverte reçu, de manière à faciliter le processus de découverte en le limitant aux domaines de fonctionnement dans lequel un signal de balise est susceptible d'être découvert.

Ainsi, à l'étape 144, le module RT 30 du noeud i découvre son environnement radioélectrique en se limitant aux canaux et, pour chaque canal, au(x) gisement(s) indiqué(s) dans la requête en découverte.

A l'issue de ce processus de découverte, le module RT 30 génère une liste Li des signaux de balise découverts. La liste Li comporte l'identifiant de chaque noeud j dont le signal de balise a été détecté et, pour chaque noeud j, le numéro du canal fj dans lequel le signal de balise a été détecté, ainsi que le gisement aj sous lequel le signal de balise a été détecté.

A l'étape 150, le module de commande 40 lit la liste Li et construit un message des voisins détectés M3 contenant les informations présentes dans la liste Li. Le message des voisins détectés est transmis, via le module de communication 60 et l'infrastructure de communication 70, au central de traitement 80.

A l'étape 160, le central de traitement 80 collecte les différents messages des voisins détectés M3 provenant des différents noeuds i du réseau R.

Le central de traitement 80 effectue (étape 162) un second calcul destiné à déterminer une topologie optimale A du réseau. Ce second calcul est par exemple fondé sur un algorithme d'optimisation de la structure en arbre du réseau ad hoc. Un tel algorithme est connu de l'homme du métier. Dans ce calcul, sont utilisées les informations contenues dans les listes Li retournées par les noeuds et indiquant les noeuds voisins effectivement détectés.

A l'étape 170, à partir de l'arborescence optimale A, le central de traitement 80 sélectionne, pour chaque noeud i, le noeud voisin j auquel le noeud i doit s'attacher. De plus, le central de traitement 80 détermine les paramètres de fonctionnement du noeud i nécessaires à l'établissement de l'attachement vers le noeud j : le canal à utiliser fj et le gisement aj à utiliser.

A l'étape 172, le central de commande 80 transmet à chaque noeud i du réseau un message d'attachement M4 comportant l'identifiant j du noeud voisin auquel le noeud i doit s'attacher, ainsi que le numéro du canal fj à utiliser pour établir cet attachement et le gisement aj dans la direction duquel il faut pointer l'antenne du module RT afin de réaliser cet attachement.

A l'étape 180, le module de commande 40 reçoit un message d'attachement M4.

A l'étape 182 le module de commande 40 applique une requête en attachement au module RT 30 de manière à ce que ce dernier initie un processus d'attachement avec le noeud j sélectionné. La requête en attachement comporte les valeurs des paramètres de fonctionnement du module RT 30 (canal et gisement) permettent la configuration de ce dernier pour réaliser l'attachement vers le noeud j.

A l'étape 184, le module RT 30 entame, conformément au protocole prédéterminé, le processus d'attachement vers le noeud j.

A l'itération suivante du procédé 100, le noeud i génère un message d'identification comportant l'état de l'attachement en cours. Cette information permet au central de commande 80 de déterminer si l'attachement requis à l'itération précédente s'est effectué correctement.

Au niveau d'un noeud du réseau, le procédé 100 est initié périodiquement par le module de commande 40, à moins qu'entre deux exécutions « volontaires », le module RT 30 n'indique que l'attachement courant a été rompu et qu'il convient d'essayer d'en établir un nouveau. Dans ce cas, dès réception par le module de commande 40 d'une requête en rupture de l'attachement courant, le module de commande 40 initie l'exécution du procédé 100.

Par la mise en oeuvre du procédé 100, le noeud voisin auquel un noeud i s'attache est sélectionné par la maximisation d'un critère global au niveau du central de commande, la notion de voisinage entre noeuds étant déterminée par des informations de positionnement géographique transmises par chaque noeud. Ce critère consiste par exemple à maximiser une fonction de coût liée à la connectivité du réseau et dont les variables sont, entre autres, les informations de position de chaque noeud i.

Ce critère est global au sens où les calculs portent sur la maximisation de grandeurs relatives à l'ensemble du réseau. Il s'oppose à un critère local, où des grandeurs relatives à un noeud sont calculées par le noeud lui-même. Par exemple, bien que l'attachement d'un noeud i à un noeud j ne soit pas intéressant localement pour le noeud i, le central de traitement 80 peut requérir cet attachement et simultanément requérir l'attachement d'un noeud k avec un noeud l pour atteindre, globalement, à une connectivité maximale du réseau.

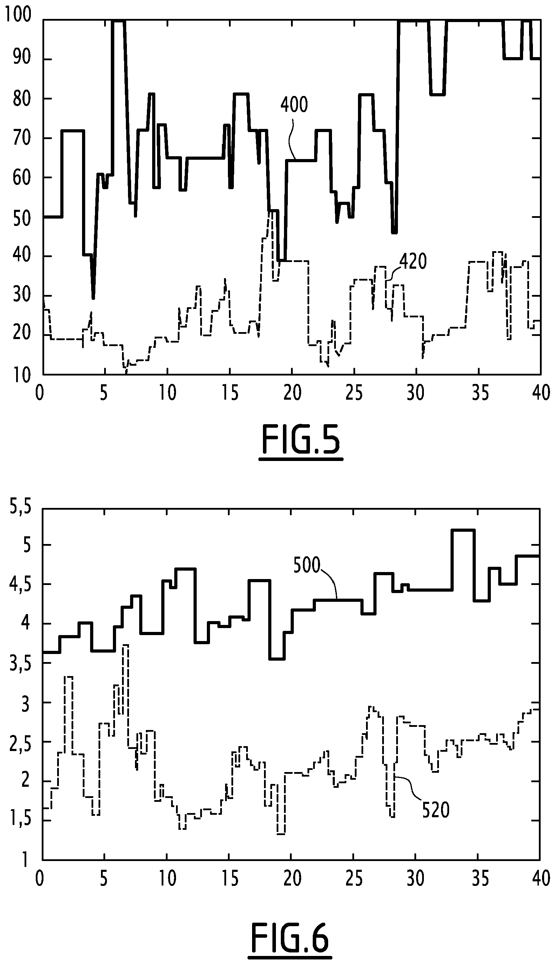

Sur les figures 4 et 5, les graphes 400 et 500 représentent respectivement le pourcentage de paires de noeuds pouvant échanger des données et la longueur moyenne des chemins dans un réseau mobile ad hoc à base de technologie cellulaire sans-fil mettant en oeuvre le procédé d'attachement 100 présenté ci-dessus. Ces graphes résultent d'une simulation numérique de l'évolution dans le temps de la topologie du réseau, au cours des déplacements des différents noeuds.

Selon cette simulation, la mise en oeuvre du procédé d'attachement 100 permet d'obtenir un réseau dont la topologie est, à chaque instant, optimale.

Ceci par opposition aux graphes 420 et 520, qui correspondent à un réseau où chaque noeud met en oeuvre un procédé d'attachement selon lequel le noeud sélectionné est choisi de manière aléatoire parmi les noeuds voisins.

De nombreuses variantes du procédé d'attachement et du système permettant sa mise en oeuvre sont envisageables.

Ainsi, d'autres informations pourraient être prises en compte par le central de traitement de manière à sélectionner ce qui constitue, pour un noeud i, le meilleur noeud j de son voisinage en termes de connectivité pour le réseau dans son ensemble.

D'autres paramètres de fonctionnement pourraient également être considérés. Ainsi par exemple, si le module RT d'un noeud est fixé sur un mât et est composé de deux antennes à espacement réglable, afin d'obtenir une diversité verticale et, par conséquent un fonctionnement optimal, alors l'espacement entre ces deux antennes constitue un paramètre de fonctionnement supplémentaire du module RT qu'il peut être intéressant de régler dynamiquement pour améliorer le rapport signal sur bruit.

Par exemple encore, la puissance de fonctionnement des moyens d'émission/réception du module RT est un paramètre de fonctionnement réglable.

Bien évidemment, le réglage des paramètres de fonctionnement est avantageux, mais n'est pas nécessaire. Le procédé peut en effet consister uniquement à commander le module RT d'un noeud i afin qu'il découvre l'ensemble de son environnement et génère une liste des noeuds voisins découverts, cette liste étant ensuite transmise au central de traitement pour que celui-ci sélectionne le noeud voisin auquel le noeud i doit s'attacher.

En variante, le central de traitement détermine également le canal sur lequel le module RT du noeud i et le module AP du noeud voisin j sélectionné doivent établir l'attachement. En effet, alors que le noeud i a découvert la présence du noeud voisin j sélectionné sur un premier canal, il est peut être avantageux que ces deux noeuds établissent un attachement sur un second canal. Dans cette variante, le central de traitement optimisation de l'utilisation de la ressource fréquentielle au sein du réseau.

Ainsi, après avoir sélectionné le noeud voisin j auquel le noeud i doit se connecter, le central de traitement détermine le canal fj à utiliser pour ce faire. Le central de traitement adresse un message d'attachement M4 au module RT du noeud i avec les paramètres nécessaires afin de réaliser cet attachement, et simultanément adresse un message d'attachement M4' au module AP du noeud voisin j, qui comporte le numéro du canal fj' sur lequel le module AP doit maintenant émettre des signaux de balise. Le module RT du noeud i détecte ces signaux de balise dans le nouveau canal cj' et initie le processus d'attachement avec le module AP du noeud voisin j sur ce canal.

En variante, l'infrastructure de communication comporte, à la place ou en complément de la composante satellitaire, une pluralité de stations de base fonctionnant par exemple dans un domaine radio hautes-fréquences (HF).

Il est à noter que, par exemple pour le cas d'une antenne à six facettes propre à fonctionner dans une dizaine de canaux, la découverte par le module RT de l'ensemble de son environnement radioélectrique prend de l'ordre de quelques minutes (par exemple 5 mn). Ainsi, si un signal de balise est détecté en début de processus de découverte, permettant de déterminer l'identifiant j, le canal fj et le gisement aj d'un noeud voisin, il est probable que ces informations ne soient plus utilisables quelques minutes plus tard après la fin du processus de découverte et au moment de la mise en oeuvre du processus d'attachement avec ce noeud j voisin, le noeud j s'étant déplacé.

En revanche, la mise en oeuvre du présent procédé permet de limiter le domaine (en fréquence et en orientation) à découvrir et, par conséquent, de réduire drastiquement le temps nécessaire au module RT pour réaliser le processus de découverte (quelques secondes). La durée de l'étape de découverte étant réduite, les informations de positionnement géographique instantané délivrées par chaque noeud sont alors exploitables pour déterminer la notion de voisinage et décider quel noeud doit s'attacher à quel autre.

## Revendications

1. Procédé d'attachement (100) dans un réseau mobile ad hoc à base de technologie cellulaire sans fil, du type comportant une pluralité de noeuds (i), chaque noeud comportant un module de point d'accès (20) et au moins un module de terminal relais (30), un module de terminal relais d'un noeud étant apte à découvrir le module de point d'accès de noeuds voisins et à initier un processus d'attachement avec un module de point d'accès d'un noeud voisin sélectionné, un module de terminal relais d'un noeud étant attaché à au plus un module de point d'accès d'un noeud voisin, **caractérisé en ce qu'**il comporte les étapes consistant :
- au niveau de chaque noeud (i), à acquérir (110) un positionnement géographique du noeud et à transmettre (114), via une infrastructure de radiocommunication de service (70), le positionnement géographique acquis vers un central de traitement (80) ;
- au niveau du central de traitement (80), à calculer (162) une topologie optimale (A) du réseau en modifiant les attachements possibles entre noeuds considérés comme voisins sur la base de leur positionnement géographique relative, à sélectionner (170) à partir de la topologie optimale, pour chaque noeud (i), le noeud voisin (j) auquel le noeud considéré doit se connecter, et à transmettre (172) à chaque noeud un identifiant du noeud voisin sélectionné ; et,
- au niveau de chaque noeud, à commander (182) le module de terminal relais du noeud (i), pour initier un processus d'attachement vers le module de point d'accès du noeud voisin (j) sélectionné indiqué par le central de traitement.

2. Procédé selon la revendication 1, dans lequel :
- au niveau du central de traitement (80), après avoir calculé la topologie optimale (A), l'étape consistant à sélectionner, pour chaque noeud(i), le noeud voisin (j) auquel il doit se connecter, comporte la détermination, pour chaque noeud, des paramètres de fonctionnement permettant au module de terminal relais dudit noeud d'établir un attachement vers le noeud sélectionné, et à transmettre (172), à chaque noeud, en plus de l'identifiant (j) du noeud voisin sélectionné, les paramètres de fonctionnement déterminés (aⱼ, fⱼ) ; et,
- au niveau de chaque noeud (i), régler (182) le module de terminal relais du noeud conformément aux paramètres de fonctionnement indiqués par le central de traitement, avant d'initier le processus d'attachement vers le module de point d'accès du noeud voisin (j) sélectionné.

3. Procédé selon la revendication 1 ou la revendication 2, comportant :
- au niveau du central de traitement, avant de calculer la topologie optimale (A), une étape consistant à calculer (130), pour chaque noeud (i), un ensemble (Ui) de noeuds voisins avec chacun desquels le noeud considéré est susceptible d'établir un attachement, une étape consistant à déterminer (132), pour chaque noeud voisin dudit ensemble (Ui), des paramètres de fonctionnement (aj, fj) permettant au module de terminal relais du noeud d'établir un attachement vers le noeud voisins considéré, et une étape consistant à transmettre (134), à chaque noeud (11), les paramètres de fonctionnement déterminés pour chaque noeud voisin dudit ensemble ;
- au niveau de chaque noeud (i), une étape consistant à réaliser (144) un processus de découverte limité à un domaine correspondant aux paramètres de fonctionnement reçus et conduisant à la génération d'une liste (Li) contenant les identifiants des noeuds voisins effectivement détectés, et une étape de transmission (150) de la liste générée vers le central de traitement (180) ; et
- au niveau du central de traitement, l'étape (162) de calcul d'une topologie optimale (A) du réseau en modifiant les attachements possibles entre noeuds considérés comme voisins sur la base de leur position géographique relative et effectivement détecté par le noeud considéré tels qu'indiqué dans chaque liste reçue.

4. Procédé selon l'une quelconque des revendications 1 à 3, dans lequel le positionnement géographique comporte une position instantanée (Pi) du noeud (i) et/ou un cap (ci) instantané du noeud (i).

5. Procédé selon l'une quelconque des revendications 1 à 4, dans lequel un paramètre de fonctionnement du module de terminal relais d'un noeud (i) est un numéro (fj) d'un canal d'une bande de fréquences allouée au réseau et/ou une direction de pointage (aj) d'un moyen formant antenne du module de terminal relais.

6. Procédé selon l'une quelconque des revendications 1 à 5, dans lequel le central de traitement (80) choisit un canal d'une bande de fréquence allouée sur lequel l'attachement entre le noeud considéré et le noeud voisin sélectionné doit s'effectuer, et transmet le canal choisi au module de terminal relais du noeud et au module de point d'accès du noeud voisin.

7. Support d'enregistrement d'informations, **caractérisé en ce qu'**il comporte les instructions pour la mise en oeuvre d'un procédé d'attachement conforme à l'une quelconque des revendications 1 à 6, lorsque une partie des instructions sont exécutées par un calculateur d'un noeud (i) du réseau et une autre partie des instructions sont exécutées par un calculateur d'un central de traitement (80).

8. Système pour la mise en oeuvre d'un procédé d'attachement selon l'une quelconque des revendications 1 à 6, comportant une pluralité de noeuds (i), chaque noeud comportant un module de point d'accès (20), au moins un module de terminal relais (30), un module de terminal relais d'un noeud étant apte à découvrir les modules de point d'accès de noeuds voisins et à initier un processus d'attachement avec un module de point d'accès d'un noeud voisin sélectionné, un module de terminal relais d'un noeud étant attaché à au plus un module de point d'accès d'un noeud voisin,
**caractérisé**
**en ce qu'**il comporte une infrastructure de radiocommunication de service (70) ;
**en ce que** chaque noeud comporte un module de communication (60) propre à se connecter à ladite infrastructure ;
**en ce qu'**il comporte un central de traitement (80) propre à échanger des messages avec chacun des noeuds du réseau via ladite infrastructure ;
**en ce que** chaque noeud (i) comporte un module de commande (40) propre à acquérir un positionnement géographique dudit noeud et à transmettre le positionnement géographique acquis au central de traitement ;
et **en ce que** le central de traitement est propre à calculer une topologie optimale (A) du réseau en modifiant les attachements possibles entre noeuds considérés comme voisins sur la base de leur positionnement géographique relatif, à sélectionner à partir de la topologie optimale, pour chaque noeud, le noeud voisin (j) auquel le noeud considéré doit se connecter, et à transmettre à chaque noeud un identifiant du noeud voisin sélectionné, chaque noeud étant propre à commander le module de terminal relais dont il est équipé pour initier un processus d'attachement vers le module de point d'accès du noeud voisin sélectionné indiqué par le central de traitement.

9. Système selon la revendication 8, dans lequel le module de terminal relais (30) de chaque noeud (1) est réglable selon des paramètres de fonctionnement, et en ce que le central de traitement (80) est propre à déterminer, pour chaque noeud, des paramètres de fonctionnement (fj, cj) permettant au module de terminal relais dudit noeud (1) d'établir un attachement vers le noeud voisin (j) sélectionné, et à transmettre, à chaque noeud, en plus de l'identifiant (j) du noeud voisin sélectionné, les paramètres de fonctionnement déterminés.

10. Système selon la revendication 8 ou la revendication 9, dans lequel le central de traitement (80) est propre, avant de calculer la topologie optimale (A), à déterminer, pour chaque noeud, un ensemble de noeuds voisins avec chacun desquels le noeud d'établir un attachement, et à déterminer, pour chaque noeud voisin dudit ensemble, des paramètres de fonctionnement permettant au module de terminal relais du noeud considéré d'établir un attachement vers le noeud voisin considéré, et à transmettre, à chaque noeud, les paramètres de fonctionnement déterminés pour chaque noeud voisin dudit ensemble ; dans lequel chaque noeud (i) est propre à réaliser un processus de découverte limité à un domaine correspondant aux paramètres de fonctionnement reçus à générer une liste des noeuds voisins effectivement détectés par le noeud considéré, et à transmettre la liste générée vers le central de traitement ;
et dans lequel le central de traitement est propre à calculer une topologie optimale du réseau en modifiant les attachements possibles entre le module de terminal relais d'un premier noeud et le module de point d'accès d'un second noeud qui est considéré comme voisin sur la base de son positionnement géographique relatif par rapport au premier noeud et qui a été effectivement détecté par le premier noeud.

11. Système selon l'une quelconque des revendications 8 à 10, dans lequel le central de traitement est propre à choisir un canal d'une bande de fréquences allouée au réseau dans lequel le module RT d'un noeud et le module AP du noeud voisin sélectionné doivent établir un attachement, et à transmettre le canal choisi au module RT du noeud et au module AP du noeud voisin sélectionné.

## Patentansprüche

1. Verfahren zum Verbinden (100) in einem mobilen Ad-hoc-Netzwerk auf der Grundlage einer Drahtlos-Zellulartechnologie des Typs, der eine Mehrzahl von Knoten (i) aufweist, wobei jeder Knoten ein Zugangspunktmodul (20) und mindestens ein Relais-Endgerätmodul (30) aufweist, wobei ein Relais-Endgerätmodul eines Knotens in der Lage ist, das Zugangspunktmodul von benachbarten Knoten zu erkennen und einen Vorgang des Verbindens mit einem Zugangspunktmodul eines ausgewählten benachbarten Knotens zu initiieren, wobei ein Relais-Endgerätmodul eines Knotens mit höchstens einem Zugangspunktmodul eines benachbarten Knotens verbunden wird, **dadurch gekennzeichnet, dass** es die folgenden Schritte aufweist:
- Erfassen (110), an jedem Knoten (i), einer geographischen Positionierung des Knotens und Übermitteln (114) der erfassten geographischen Positionierung an eine Verarbeitungseinheit (80) mittels einer Dienst-Radiokommunikationsinfrastruktur (70),
- Berechnen (162), an der Verarbeitungseinheit (80), einer optimalen Topologie (A) des Netzwerks durch Modifizieren der möglichen Verbindungen zwischen auf der Grundlage ihrer relativen geographischen Positionierung als benachbart betrachteten Knoten, Auswählen (170), für jeden Knoten (i), des benachbarten Knotens (j), mit dem sich der betreffende Knoten verbinden soll, ausgehend von der optimalen Topologie, und Übermitteln (172) einer Kennung des ausgewählten benachbarten Knotens an jeden Knoten, und
- Steuern (182), an jedem Knoten, des Relais-Endgerätmoduls des Knotens (i), um einen Vorgang des Verbindens mit dem Zugangspunktmodul des ausgewählten benachbarten Knotens (j) zu initiieren, der durch die Verarbeitungseinheit angegeben wird.

2. Verfahren gemäß Anspruch 1, wobei:
- an der Verarbeitungseinheit (80), nach dem Berechnen der optimalen Topologie (A), der Schritt, der darin besteht, für jeden Knoten (i) den benachbarten Knoten (j) auszuwählen, mit dem er sich verbinden soll, das Bestimmen der Funktionsparameter für jeden Knoten aufweist, die dem Relais-Endgerätmodul des Knotens erlauben, eine Verbindung mit dem ausgewählten Knoten herzustellen, und an jeden Knoten (172), zusätzlich zu der Kennung (j) des ausgewählten benachbarten Knotens, die bestimmten Funktionsparameter (aⱼ, fⱼ) zu übermitteln, und
- Einstellen (182), an jedem Knoten (i), des Relais-Endgerätmoduls des Knotens gemäß den durch die Verarbeitungseinheit angegebenen Funktionsparametern vor dem Initiieren des Vorgangs zum Verbinden mit dem Zugangspunktmodul des ausgewählten benachbarten Knotens (j).

3. Verfahren gemäß Anspruch 1 oder Anspruch 2, aufweisend:
- an der Verarbeitungseinheit, vor dem Berechnen der optimalen Topologie (A), einen Schritt, der darin besteht, für jeden Knoten (i) einen Satz (Ui) von benachbarten Knoten zu berechnen (130), wobei der betreffende Knoten in der Lage ist, mit jedem von diesen eine Verbindung herzustellen, einen Schritt, der darin besteht, für jeden benachbarten Knoten des Satzes (Ui) Funktionsparameter (aj, fj) zu bestimmen (132), die dem Relais-Endgerätmodul des Knotens erlauben, eine Verbindung mit dem betreffenden benachbarten Knoten herzustellen, und einen Schritt, der darin besteht, die für jeden benachbarten Konten des Satzes bestimmten Funktionsparameter an jeden Knoten (11) zu übermitteln (134),
- an jedem Knoten (i) einen Schritt, der darin besteht, einen Erkennungsvorgang durchzuführen (144), der auf einen Bereich begrenzt ist, der den empfangenen Funktionsparametern entspricht, und zum Erstellen einer Liste (Li) führt, die die Kennungen der benachbarten Knoten enthält, die tatsächlich detektiert wurden, und einen Schritt des Übermittelns (150) der erstellten Liste an die Verarbeitungseinheit (180), und
- an der Verarbeitungseinheit den Schritt (162) des Berechnens einer optimalen Topologie (A) des Netzwerks durch Modifizieren der möglichen Verbindungen zwischen Knoten, die auf der Grundlage ihrer relativen geographischen Position als benachbart betrachtet werden und die tatsächlich durch den betreffenden Knoten detektiert wurden, wie in jeder empfangenen Liste angegeben.

4. Verfahren gemäß irgendeinem der Ansprüche 1 bis 3, wobei die geographische Positionierung eine momentane Position (Pi) des Knotens (i) und/oder einen momentanen Kurs (ci) des Knotens (i) aufweist.

5. Verfahren gemäß irgendeinem der Ansprüche 1 bis 4, wobei ein Funktionsparameter des Relais-Endgerätmoduls eines Knotens (i) eine Nummer (fj) eines Kanals mit einem dem Netzwerk zugewiesenen Frequenzband und/oder eine Peilungsrichtung (aj) eines Mittels ist, das die Antenne des Relais-Endgerätmoduls bildet.

6. Verfahren gemäß irgendeinem der Ansprüche 1 bis 5, wobei die Verarbeitungseinheit (80) einen Kanal mit einem zugewiesenen Frequenzband auswählt, auf dem die Verbindung zwischen dem betreffenden Knoten und dem ausgewählten benachbarten Knoten erfolgen soll, und den ausgewählten Kanal an das Relais-Endgerätmodul des Knotens und an das Zugangspunktmodul des benachbarten Knotens übermittelt.

7. Informationsaufzeichnungsmedium, **dadurch gekennzeichnet, dass** es die Befehle zum Durchführen eines Verfahrens zum Verbinden gemäß irgendeinem der Ansprüche 1 bis 6 aufweist, wenn ein Teil der Befehle durch einen Rechner eines Knotens (i) des Netzwerks ausgeführt wird und ein anderer Teil der Befehle von einem Rechner einer Verarbeitungseinheit (80) ausgeführt wird.

8. System zum Durchführen eines Verfahrens zum Verbinden gemäß irgendeinem der Ansprüche 1 bis 6, aufweisend eine Mehrzahl von Knoten (i), wobei jeder Knoten aufweist ein Zugangspunktmodul (20), mindestens ein Relais-Endgerätmodul (30), wobei ein Relais-Endgerätmodul eines Knotens in der Lage ist, die Zugangspunktmodule von benachbarten Knoten zu erkennen und einen Vorgang des Verbindens mit einem Zugangspunktmodul eines ausgewählten Nachbarknotens zu initiieren, wobei ein Relais-Endgerätmodul eines Knotens mit höchstens einem Zugangspunktmodul eines benachbarten Knotens verbunden ist,
**dadurch gekennzeichnet,**
**dass** es eine Dienst-Radiokommunikationsinfrastruktur (70) aufweist,
**dass** jeder Knoten ein Kommunikationsmodul (60) aufweist, das in der Lage ist, sich mit der Infrastruktur zu verbinden,
**dass** es eine Verarbeitungseinheit (80) aufweist, die in der Lage ist, über die Infrastruktur Nachrichten mit jedem der Knoten des Netzwerks auszutauschen,
**dass** jeder Knoten (i) ein Steuermodul (40) aufweist, das in der Lage ist, eine geographische Positionierung des Knotens zu erfassen und die erfasste geographische Positionierung an die Verarbeitungseinheit zu übermitteln,
und **dass** die Verarbeitungseinheit in der Lage ist, eine optimale Topologie (A) des Netzwerks zu berechnen, durch Modifizieren der möglichen Verbindungen zwischen auf der Grundlage ihrer relativen geographischen Positionierung als benachbart betrachteten Knoten, ausgehend von der optimalen Topologie für jeden Knoten den benachbarten Knoten (j) auszuwählen, mit dem sich der betreffende Knoten verbinden soll, und an jeden Knoten eine Kennung des ausgewählten benachbarten Knotens zu übermitteln, wobei jeder Knoten in der Lage ist, das Relais-Endgerätmodul zu steuern, mit dem er ausgestattet ist, um einen Vorgang des Verbindens mit dem Zugangspunktmodul des ausgewählten benachbarten Knotens zu initiieren, der durch die Verarbeitungseinheit angegeben wird.

9. System gemäß Anspruch 8, wobei das Relais-Endgerätmodul (30) jedes Knotens (1) gemäß Funktionsparametern einstellbar ist, und dass die Verarbeitungseinheit (80) in der Lage ist, für jeden Knoten Funktionsparameter (fj, cj) zu bestimmen, die dem Relais-Endgerätmodul des Knotens (1) erlauben, eine Verbindung mit dem ausgewählten benachbarten Knoten (j) herzustellen und an jeden Knoten zusätzlich zu der Kennung (j) des ausgewählten benachbarten Knotens die bestimmten Funktionsparameter zu übermitteln.

10. System gemäß Anspruch 8 oder Anspruch 9, wobei die Verarbeitungseinheit (80) in der Lage ist, vor dem Berechnen der optimalen Topologie (A) für jeden Knoten einen Satz von benachbarten Knoten zu bestimmen, wobei der Knoten mit jedem dieser eine Verbindung herstellen kann, und für jeden benachbarten Knoten des Satzes Funktionsparameter zu bestimmen, die dem Relais-Endgerätmodul des betreffenden Knotens erlauben, eine Verbindung mit dem betreffenden benachbarten Knoten herzustellen, und die bestimmten Funktionsparameter für jeden benachbarten Knoten des Satzes an jeden Knoten zu übermitteln,
wobei jeder Knoten (i) in der Lage ist, einen Vorgang des Erkennens begrenzt auf einen Bereich durchzuführen, der den empfangenen Funktionsparametern entspricht, eine Liste der tatsächlich durch den betreffenden Knoten detektierten benachbarten Knoten zu erstellen, und die erstellte Liste an die Verarbeitungseinheit zu übermitteln,
und wobei die Verarbeitungseinheit in der Lage ist, eine optimale Topologie des Netzwerks zu berechnen, durch Modifizieren der möglichen Verbindungen zwischen dem Relais-Endgerätmodul eines ersten Knotens und dem Zugangspunktmodul eines zweiten Knotens, der auf der Grundlage seiner relativen geographischen Positionierung relativ zu dem ersten Knoten als benachbart betrachtet wird, und der tatsächlich durch den ersten Knoten detektiert wurde.

11. System gemäß irgendeinem der Ansprüche 8 bis 10, wobei die Verarbeitungseinheit in der Lage ist, einen Kanal mit einem dem Netzwerk zugewiesenen Frequenzband auszuwählen, in dem das RT-Modul eines Knotens und das AP-Modul des ausgewählten benachbarten Knotens eine Verbindung herstellen sollen, und den ausgewählten Kanal an das RT-Modul des Knotens und das AP-Modul des ausgewählten benachbarten Knotens zu übermitteln.

## Claims

1. An attachment method (100) in an ad hoc mobile network based on wireless cellular technology, of the type including a plurality of nodes (i), each node including an access point module (20) and at least one relay terminal module (30), a relay terminal module of one node being able to discover the access point module of neighboring nodes and initiate an attachment process with an access point module of a selected neighboring node, a relay terminal module of one node being attached at most to an access point module of a neighboring node, **characterized in that** it includes the following steps:
- at each node (i), acquiring (110) a geographic position of the node and sending (114), via a service radiocommunication infrastructure (70), the acquired geographical position to a processing unit (80);
- at the processing unit (80), computing (162) an optimal topology (A) of the network by modifying the possible attachments between nodes considered to be neighboring based on their relative geographic position, selecting (170), from the optimal topology, for each node (i), the neighboring node (j) to which the considered node must connect, and sending (172) to each node an identifier of the selected neighboring node; and
- at each node, commanding (182) the relay terminal module of the node (i) to initiate an attachment process to the access point module of the selected neighboring node (j) indicated by the processing unit.

2. The method according to claim 1, wherein:
- at the processing unit (80), after computing the optimal topology (A), the step consisting of selecting, for each node (i), the neighboring node (j) to which it must connect, includes the determination, for each node, of the operating parameters allowing the relay terminal module of said node to establish an attachment to the selected node, and sending (172) each node, in addition to the identifier (j) of the selected neighboring node, the determined operating parameters (aⱼ, fⱼ); and,
- at each node (i), adjusting (182) the relay terminal module of the node according to the operating parameters indicated by the processing unit, before initiating the attachment process to the access point module of the selected neighboring node (j).

3. The method according to claim 1 or claim 2, including:
- at the processing unit, before computing the optimal topology (A), a step consisting of computing (130), for each node (i), a set (Ui) of neighboring nodes with each of which the considered node may establish an attachment, a step consisting of determining (132), for each neighboring node of said set (Ui), operating parameters (aj, fj) allowing the relay terminal module of the node to establish an attachment to the considered neighboring nodes, and a step consisting of sending (134), to each node (11), the operating parameters determined for each neighboring node of said set;
- at each node (i), a step consisting of carrying out (144) a discovery process limited to a domain corresponding to the received operating parameters and leading to the generation of a list (Li) containing the identifiers of the neighboring nodes actually detected; and a step for sending (150) the generated list to the processing unit (180);
- at the processing unit, the step (162) for computing an optimal topology (A) of the network by modifying the possible attachments between nodes considered to be neighboring based on their relative geographical position and actually detected by the considered node as indicated in each received list.

4. The method according to any one of claims 1 to 3, wherein the geographic position includes an instantaneous position (Pi) of the node (i) and/or instantaneous course (ci) of the node (i).

5. The method according to any one of claims 1 to 4, wherein one operating parameter of the relay terminal module of a node (i) is a channel number (fj) of a frequency band allocated to the network and/or an aiming direction (aj) of a means forming an antenna of the relay terminal module.

6. The method according to any one of claims 1 to 5, wherein the processing unit (80) chooses a channel of an allocated frequency band on which the attachment between the considered node and the selected neighboring node must be made, and sends the selected channel to the relay terminal module of the node and the access point module of the neighboring node.

7. An information recording medium, **characterized in that** it includes the instructions for implementing an attachment method according to any one of claims 1 to 6, when part of the instructions are executed by a computer of a node (i) of the network and another part of the instructions are executed by a computer of a processing unit (80).

8. A system for implementing an attachment method according to any one of claims 1 to 6, including a plurality of nodes (i), each node including an access point module (20), at least one relay terminal module (30), a relay terminal module of a node being able to discover the access point module of the neighboring nodes and initiate an attachment process with an access point module of a selected neighboring node, a relay terminal module of a node being attached to at least one access point module of a neighboring node,
**characterized**
**in that** it includes a service radiocommunication infrastructure (70);
**in that** each node includes a communication module (60) able to connect to said infrastructure;
**in that** it includes a processing unit (80) able to exchange messages with each of the nodes of the network via said infrastructure;
**in that** each node (i) includes a control module (40) able to acquire a geographic position of said node and send the acquired geographical position to the processing unit;
and **in that** the processing unit is able to compute an optimal topology (A) of the network by modifying the possible attachments between nodes considered to be neighboring based on their relative geographic position, selecting, from the optimal topology, for each node, the neighboring node (j) to which the considered node must connect, and sending to each node an identifier of the selected neighboring node.

9. The system according to claim 8, wherein the relay terminal module (30) of each node (1) is adjustable based on operating parameters, and in that the processing unit (80) is able to determine, for each node, the operating parameters (fj, cj) allowing the relay terminal module of said node (1) to establish an attachment to the selected node (j), and to send each node, in addition to the identifier (j) of the selected neighboring node, the determined operating parameters.

10. The system according to claim 8 or claim 9, wherein the processing unit (80) is able, before computing the optimal topology (A), to determine, for each node, a set of neighboring nodes with each of which the considered node may establish an attachment, and to determine, for each neighboring node of said set, operating parameters allowing the relay terminal module of the considered node to establish an attachment to the considered neighboring nodes, and to send, to each node, the operating parameters determined for each neighboring node of said set;
wherein each node (i) is able to carry out a discovery process limited to a domain corresponding to the received operating parameters and leading to the generation of a list of the neighboring nodes actually detected by the considered node, and to send the generated list via the processing unit;
and wherein the processing unit is able to compute an optimal topology of the network by modifying the possible attachments between the relay terminal module of a first node and the access point module of a second node that is considered to be neighboring based on its relative geographical position with respect to the first node and that has been actually detected by the first node.

11. The system according to any one of claims 8 to 10, wherein the processing unit is able to choose a channel of a frequency band allocated to the network in which the RT module of one node and the AP module of a selected neighboring node must establish an attachment, and to send the selected channel to the RT module of the node and to the AP module of the selected neighboring node.
